# EUROPÄISCHE PATENTSCHRIFT

(11) **EP 2 249 071 B1**
(45) Veröffentlichungstag und Bekanntmachung des Hinweises auf die Patenterteilung: **28.09.2011**
(21) Anmeldenummer: 09006311.6
(22) Anmeldetag: 09.05.2009
(51) Int. Cl.: F16L 7/02, F16L 5/08

(54) **Rohrabdichtungselement und Rohrleitung**
Pipe seal element and pipe
Elément d'étanchéité de conduite et conduite

(43) Veröffentlichungstag der Anmeldung: 10.11.2010
(73) Patentinhaber: Zeta Biopharma GmbH, 8144 Tobelbad (AT)
(72) Erfinder: Glössl, Andreas, 8443 Gleinstätten (AT)
(74) Vertreter: Schweiger, Johannes

(56) Entgegenhaltungen:
- EP-A1- 0 073 083
- WO-A1-03/052211
- DE-U1- 20 200 374
- GB-A- 2 317 934
- US-A1- 2004 080 119

## Beschreibung

Die Erfindung betrifft eine Rohrleitung mit einem Rohrabdichtungselement, das den Zweck hat, ein Außenrohr, das mit Abstand zu einem Transportrohr für ein Medium und konzentrisch zu diesem angeordnet ist, endseitig gegenüber dem Transportrohr abzudichten. Eine solche Rohrleitung ist aus GB-A-2 317 934 bekannt.

In zahlreichen Bereichen der Technik, beispielsweise in Labors, Raffinerien oder Reinräumen, müssen Transportleitungen für ein Medium (gasförmig, flüssig, staubförmig etc.) thermisch isoliert werden.

Dazu sind Rohrhalbschalen aus Mineralwolle bekannt, die an der öder den Nahtstellen miteinander verklebt werden oder deren Nahtstellen mit einem Klebeband überklebt werden.

Zum Stand der Technik gehören auch biegsame Isolierplatten, die analog auf der Transportleitung konfektioniert werden.

Abgesehen davon, dass das Aufbringen einer solchen Isolierung zeit- und kostenaufwändig ist, besteht für besondere Anwendungsfälle, wie Reinräume, der Nachteil, dass die Oberfläche der äußeren Isolierung zu rauh ist bzw. Nähte, Klebestellen etc. stören, an und in denen sich Feststoffteilchen wie Staub ansammeln können, was in Reinräumen nicht erlaubt ist.

Ein weiterer Nachteil der bekannten Isolierungen besteht darin, dass sie für bestimmte Anwendungsfälle keine ausreichende Eigenstabilität aufweisen.

Die skizzierten Nachteile sollen mit dem Gegenstand der Erfindung überwunden werden. Dabei ist die Zielsetzung insbesondere, eine Möglichkeit aufzuzeigen, wie eine Transportleitung für ein Medium so isoliert werden kann, dass eine möglichst glatte Außenfläche zur Verfügung gestellt wird.

Der Erfindungsgedanke basiert auf folgender Erkenntnis:

Anstelle einer Isoliermanschette, die auf oder um das Transportrohr gewickelt wird, sieht die Erfindung ein mehr oder weniger eigensteifes Außenrohr vor, das mit Abstand zum Transportrohr konzentrisch zu diesem um das Transportrohr herum angeordnet wird. Dieses Außenrohr kann beispielsweise aus Stahlblech bestehen, das nahtlos gefertigt wurde. Auf diese Weise kann eine extrem glatte und hygienisch einwandfreie Außen-Oberfläche zur Verfügung gestellt werden.

Um das Außenrohr gegenüber dem Transportrohr zu fixieren sind Rohrabdichtungselemente vorgesehen, die am Ende des Außenrohrs innenseitig zwischen Außenrohr und Transportrohr angeordnet werden. Jedes Rohrabdichtungselement besteht dabei aus zwei Teilen, die in einem ersten Schritt auf das Transportrohr aufgesetzt und dann in den Ringraum zwischen Transportrohr und Außenrohr eingeschoben werden. Im nächsten Schritt werden die beiden ringförmigen Teile gegeneinander verspannt (festgelegt). Dabei ist die Geometrie der Körper und die Ausbildung der Befestigungsmittel so, dass beim Verspannen der Körper radial Kräfte auf mindestens einen der Körper wirken, der dadurch radial nach außen und innen verformt wird und dabei den Ringraum zwischen Außenrohr und Transportrohr vollständig abdichtet.

Aus dieser Beschreibung folgt, dass zumindest einer der Körper, nämlich der, der verformt werden soll, im unbelasteten Zustand eine Geometrie besitzt, die angenährt dem Ringraum zwischen Transportrohr und Außenrohr entspricht, so dass dieses Teil mehr oder weniger fluchtend in den Ringraum eingeschoben werden kann, bevor es durch den weiteren Körper belastet und so verformt wird, dass die gewünschte radiale Abdichtung erfolgt.

In ihrer allgemeinsten Ausführungform betrifft die Erfindung eine Rohrleitung nach dem unabhängigen Anspruch 1.

Die beiden Körper weisen beispielsweise jeweils die Form einer Ringscheibe auf. Zumindest die zu verformende Ringscheibe besitzt dabei eine ausreichende Höhe (Breite ihrer Umfangsfläche), um die gewünschte Dichtwirkung zu erreichen.

Der zweite Körper kann einen kleineren Außendurchmesser aufweisen als der erste Körper, wenn der zweite Körper dazu genutzt wird, radiale Kräfte in den ersten Körper zu übertragen. Dies wird anhand eines Ausführungsbeispiels näher erläutert.

Zur Festlegung der beiden ringförmigen Körper sieht eine Ausführungsform der Erfindung vor, die Körper mit mehreren, in Axialrichtung verlaufenden Durchbrechungen/Öffnungen zur Aufnahme von Spannelementen auszubilden.

Diese Spannelemente können Schrauben (mit Muttern) sein. Durch Anziehen der Schrauben wird der zweite Körper gegen den ersten Körper geführt (oder umgekehrt), wie dies nachstehend ebenfalls anhand der Ausführungsbeispiele näher dargestellt wird.

Die Geometrie der Körper ist so, dass die gewünschten Kräfte eingeleitet werden können. Dazu sieht eine Ausführungsform vor, die erwähnten Durchbrechungen im ersten Körper auf ihrer dem zweiten Körper zugewandten Seite mit einer in Richtung auf den zweiten Körper verlaufenden Querschnittserweiterung auszubilden. Zieht man den zweiten Körper jetzt gegen den ersten Körper, drücken beispielsweise schräg nach außen verlaufende Flanken des zweiten Körpers gegen korrespondierende Flächenabschnitte im Bereich der Durchbrechungen des ersten Körpers und diese damit radial nach außen, das heißt gegen die Innenseite des Außenrohrs bzw. gegen die Außenseite des Transportrohrs (Innenrohrs).

Die Querschnittserweiterung kann im Schnitt einem Kreissegment entsprechen; sie kann aber auch konisch (dreidimensional: kegel- oder kegelstumpförmig) ausgebildet sein. Es kommt im Ergebnis nur darauf an, dass beim Verspannen der Körper gegeneinander die gewünschten Radialkräfte übertragen werden können.

Der zu verformende Körper, also der erste Körper, ist in Axialrichtung aus zwei Abschnitten mit unterschiedlichem Außendurchmesser ausgebildet. In diesem Fall erfolgt die Anordnung des Rohrabdichtungselementes am Ende des Außenrohrs so, dass ein Teil des ersten Körpers innerhalb des Außenrohrs verläuft, während der zweite Abschnitt außen gegen das Stirnende des Außenrohrs in der Montageposition stößt. Auch dies wird in der folgenden Figurenbeschreibung näher dargestellt.

In diesem Zusammenhang kann es von Vorteil sein, zwischen beiden Abschnitten des Körpers eine umlaufende Kerbe anzuordnen, wodurch die Verformbarkeit der Abschnitte zueinander insbesondere die Verformbarkeit des Körpers in Radialrichtung erleichtert wird.

Grundsätzlich muss der zu verformende Körper selbstverständlich aus einem Material bestehen, welches unter Anwendung der Kräfte, die beim Festlegen des einen Körpers gegen den anderen Körper auftreten, die gewünschte Verformbarkeit erlaubt. Dazu werden Materialien mit einem Elastizitätsmodul <10 kN/mm² vorgeschlagen, ohne insoweit den Erfindungsgedanken zu begrenzen.

Umgekehrt sollte der andere Körper, der insbesondere zum Verspannen dient, einen höheren Elastizitätsmodul aufweisen, der beispielsweise mindestens doppelt so groß ist wie der des zu verformenden Körpers.

Geeignete Materialen für den zu verformenden (beispielsweise ersten) Körper sind: Polytetrafluorethylen, Polypropylen, Polyamid, Epoxid.

Als Material für den weiteren (beispielsweise zweiten) Körper eignen sich vor allem Metalle, beispielsweise Stahl, Aluminium oder dergleichen.

Die Materialauswahl erfolgt auch vor dem Hintergrund, dass eine möglichst glatte Außen-Oberfläche für die genannten Reinraum-Anwendungen gewünscht wird. Als Kriterium dafür kann eine Hygieneklasse gemäß DIN 11866 (Ausgabe: Januar 2003) oder die Oberflächenbeschaffenheit gemäß EN ISO 4287: 1998-10 dienen. Dabei wird eine Hygieneklasse von mindestens H1, besser: mindestens H3 angestrebt bzw. ein Rauhigkeitswert von <3,2 µm, besser <1,6 oder <0,8 µm.

Durch die Anordnung der Rohrabdichtungselemente im Endbereich des Außenrohres ergibt sich automatisch ein ringförmiger Hohlraum zwischen Transportrohr und Außenrohr in radialer Richtung bzw. zwischen den Rohrabdichtungselementen in axialer Richtung der Rohrleitung. Dieser Raum kann mit einem Isoliermaterial, wie Mineralwolle, Blähglas, geblähter Perlit, Schaumkunststoff oder dergleichen gefüllt werden. Aufgrund einer möglichen absoluten Dichtigkeit zwischen Transportrohr und Außenrohr mit Hilfe der Rohrabdichtungselemente kann der ringförmige Hohlraum aber auch zur Isolierung evakuiert werden.

Die beschriebenen Rohrabdichtungselemente bzw. Rohrleitung lassen sich leicht aufbauen. Ein Außenrohr aus Kunststoff oder Stahl, insbesondere Edelstahl, ermöglicht die Ausbildung einer extrem glatten Außen-Oberfläche ohne Nähte, Falze oder dergleichen. Die Auswahl entsprechender Werkstoffe mit entsprechenden Oberflächen für das Rohrabdichtungselement sichert die Verwendung im Reinraum, weil auch hier ein Übergang mit extrem glatter Oberfläche zum Transportrohr geschaffen wird.

Da das Außenrohr keinen besonderen mechanische Beanspruchungen unterliegt, kann es relativ dünnwandig sein. Beispielsweise als Stahlrohr genügt dabei häufig eine Materialstärke von 1-2 mm. Gleichwohl ist ein solches Rohr über mehrere Meter eigenstabil.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispielen näher erläutert.

Dabei zeigen, jeweils in schematisierter Darstellung und im Längsschnitt:
Figur 1: einen ersten Körper eines Rohrabdichtungselementes,
Figur 2: einen zugehörigen zweiten Körper eines Rohrabdichtungselementes,
Figur 3: eine Rohrleitung mit Rohrabdichtungselementen zwischen einem Transportrohr und einem Außenrohr.

In den Figuren sind gleiche oder gleichwirkende Bauteile mit gleichen Bezugsziffern dargestellt.

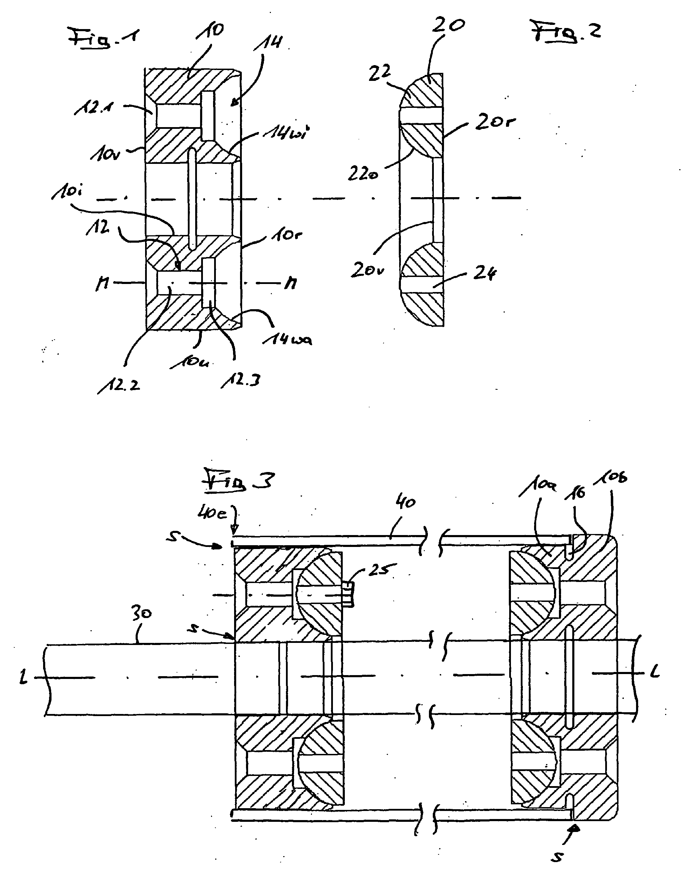

Ein nicht im Rahmen Erfindung liegendes Rohrabdichtungselement besteht vor allem aus einem in Figur 1 dargestellten ersten ringförmigen Körper 10 und einem in Figur 2 dargestellten zweiten, ringförmigen Körper 20.

Der erste Körper 10 ist als Ringscheibe gestaltet mit einer Vorderseite 10v, einer Rückseite 10r und einer Umfangsfläche 10u. Zwischen Vorderseite 10v und Rückseite 10r verlaufen vier Durchbrechungen 12, von denen in Figur 1 nur zwei zu erkennen sind. Jede Durchbrechung 12 ist wie folgt gestaltet: ausgehend von der Vorderseite 10v verläuft ein erster Abschnitt 12.1, der in Richtung auf die Rückseite 10r verjüngend ausgebildet ist, so dass sich insgesamt eine Kegelstumpfform ergibt, die sich in einem zylindrischen Abschnitt 12.2 fortsetzt, der jeweils in einen gemeinsamen ringförmigen Abschnitt 12.3 übergeht, dessen Innendurchmesser die Abschnitte 12.2 innen und dessen Außendurchmesser die Abschnitte 12.2 außen überragt. Der Abschnitt 12.3 mündet in eine umlaufende ringförmige Vertiefung 14, die ebenso wie der Abschnitt 12.3 alle vier Durchbrechungen 12 miteinander verbindet und zur Rückseite 10r hin offen ist.

Die ringförmige Vertiefung 14 weist (radial betrachtet) gewölbte äußere und innere Wandflächen 14wi, 14wa auf, die als Kreisabschnitte einem gemeinsamen Mittelpunkt zugeordnet werden können. Die Querschnittsform der Vertiefung 14 ähnelt insoweit einem Halbtorus.

Der zugehörige zweite Körper 20 gemäß Figur 2 ist ebenfalls als Ringscheibe ausgebildet, mit einer Rückseite 20r und einer Vorderseite 20v. Die Vorderseite 20v ist durch einen äußeren, umlaufenden, ringförmigen Wulst 22 charakterisiert, dessen Querschnitt zum einen von einer teilkreisförmigen Oberfläche 22o bestimmt wird und andererseits von einer Anpassung an die ringförmige Vertiefung 14 des Körpers 10.

Zwischen Vorderseite 20v und Rückseite 20r verlaufen vier Öffnungen 24, von denen wiederum nur zwei zu erkennen sind, wobei die Anordnung der Öffnungen 24 korrespondierend zu den Durchbrechungen 12 des Körpers 10 ist.

Figur 3 zeigt eine Rohrleitung mit einem Transportrohr 30 für ein Gas mit einer Längsachse L-L und einem konzentrisch dazu angeordneten Außenrohr 40. Das Transportrohr 30 überragt das Außenrohr 40 beidseitig.

Im linken Teil von Figur 3 ist ein Rohrabdichtungselement gemäß den Figuren 1,2 im montierten Zustand dargestellt. Dazu wurde der zweite Körper 20 mittels Schrauben 25 (mit zugehörigen Muttern) gegen den Körper 10 verspannt. Beim Auflaufen des wulstförmigen Abschnitts 22 auf die Wände 14wa, 14wi der ringförmigen Vertiefung 14 des ersten Teils 10 erfolgte eine Übertragung radialer Kräfte vom Körper 20 auf den Körper 10 und damit eine. Verformung des Körpers 10 radial nach innen und außen in einem solchen Umfang, dass anschließend sowohl die Umfangsfläche 10u als auch die korrespondierende Innenfläche 10i staubdicht gegen das Außenrohr 40 bzw. das Transportrohr 30 anliegen.

Die Positionierung des Körpers 10 ist derart, dass seine Vorderseite 10v fluchtend zum linken Ende 40e des Außenrohrs 40 verläuft.

Im rechten Teil der Figur 3 ist eine erfindungsgemäße Ausführungsform dargestellt, bei der der Körper 10 aus zwei Abschnitten 10a, 10b besteht, wobei der Abschnitt 10b einen größeren Außendurchmesser aufweist als der Abschnitt 10a. Dabei ist der Außendurchmesser des Abschnitts 10b gleich dem Außendurchmesser des Außenrohrs 40, so dass die entsprechenden Umfangsflächen in der montierten Position gemäß Figur 3 miteinander fluchten. Demgegenüber liegt der Abschnitt 10a, wie zuvor bereits erläutert, gegen die Innenwand des Außenrohrs 40 an.

Um die Verformbarkeit des Körpers 10 zu erleichtern ist zwischen den Abschnitten 10a, 10b innen- und außenseitig eine umlaufende Kerbe 16 vorgesehen.

Im Übrigen entspricht diese Ausführungsform der im linken Teil von Figur 3.

In allen Fällen besteht der Körper 10 aus Polytetrafluorethylen und der Körper 20 aus Stahl. Das Transportrohr 30 und das Außenrohr 40 bestehen aus Edelstahl mit einer Hygieneklasse H3 und einem Wert für die Oberflächenrauhigkeit (Ra-Wert) von 0,8 µm.

Die freie Oberfläche des Körpers 10 besitzt einen Rauhigkeitswert Ra von < 1,6 µm.

Mit Ausnahme der in Figur 3 mit S gekennzeichneten Stellen, an denen benachbarte Bauteile dicht gegeneinander anliegen ergibt sich eine durchgehend homogene, glatte Oberfläche, die damit in besonderer Weise für Reinraum-Anwendungen geeignet ist. Durch die hohe Oberflächengüte der Bauteile sind die Anschlussstellen S hinsichtlich Verschmutzung unproblematisch.

## Patentansprüche

1. Rohrleitung mit folgenden Merkmalen:
a) einem Transportrohr (30) für ein Medium
b) einem Außenrohr (40), das mit Abstand zum Transportrohr (30) konzentrisch zu diesem um das Transportrohr (30) herum verläuft,
c) das Transportrohr (30) ist mindestens so lang wie das Außenrohr (40)
d) zwei, unmittelbar vor jedem Ende des Außenrohrs (40) auf dem Transportrohr (30) aufsitzenden Rohrabdichtungselementen,
e) jedes Rohrabdichtungselement weist einen ersten ringförmigen Körper (10) und einen zweiten ringförmigen Körper (20) auf, die so gegeneinander festgelegt sind, dass von dem zweiten Körper (20) Radialkräfte auf den ersten Körper (10) wirken und dieser erste Körper (10) **dadurch** radial nach außen und innen verformt ist und einen Ringraum zwischen Außenrohr (40) und Transportrohr (30) abdichtet,
**dadurch gekennzeichnet, dass**
f) bei mindestens einem Rohrabdichtungselement der erste Körper (10) aus zwei, in Axialrichtung der Rohrleitung hintereinander angeordneten Abschnitten (10a, 10b) besteht, wobei ein Abschnitt (10b) einen größeren Außendurchmesser aufweist als der andere Abschnitt (10a) und der größere Außendurchmesser des Abschnitts (10b) in der montierten Position des Rohrabdichtungselementes dem Außendurchmesser des Außenrohrs (40) entspricht, während der andere Abschnitt (10a) gegen die Innenwand des Außenrohrs (40) anliegt.

2. Rohrleitung nach Anspruch 1, mit einem Rohrabdichtungselement, bei dem mindestens einer der Körper (10, 20) die Form einer Ringscheibe aufweist.

3. Rohrleitung nach Anspruch 1, mit einem Rohrabdichtungselement, bei dem der zweite Körper (20) einen kleineren Außendurchmesser aufweist als der erste Körper (10).

4. Rohrleitung nach Anspruch 1, dessen Rohrabdichtungselement einen ersten Körper (10) mit mehreren in Axialrichtung (L) verlaufenden Durchbrechungen (12, 14) zur Aufnahme von Spannelementen (25) aufweist.

5. Rohrleitung nach Anspruch 4, mit einem Rohrabdichtungselement mit Schrauben als Spannelemente (25) zur Festlegung des zweiten Körpers (20) am ersten Körper (10).

6. Rohrleitung nach Anspruch 4, mit einem Rohrabdichtungselement, dessen Durchbrechungen (12, 14) auf ihrer dem zweiten Körper (20) zugewandten Seite (10r) mit einer in Richtung auf den zweiten Körper (20) verlaufenden Querschnittserweiterung (14) ausgebildet sind.

7. Rohrleitung nach Anspruch 6, mit einem Rohrabdichtungselement, dessen Querschnittserweiterung im Schnitt einem Kreissegment entspricht.

8. Rohrleitung nach Anspruch 6, mit einem Rohrabdichtungselement, dessen Querschnittserweiterung im Schnitt konisch ist.

9. Rohrleitung nach Anspruch 1, mit einem Rohrabdichtungselement, bei dem zwischen beiden Abschnitten (10a, 10b) eine umlaufende Kerbe (16) verläuft.

10. Rohrleitung nach Anspruch 1, mit einem Rohrabdichtungselement, dessen erster Körper (10) einen Elastizitätsmodul <10 kN/mm² aufweist.

11. Rohrleitung nach Anspruch 1, mit einem Rohrabdichtungselement, dessen zweiter Körper (20) einen Elastizitätsmodul aufweist, der mindestens doppelt so groß ist wie der des ersten Körpers (10).

12. Rohrleitung nach Anspruch 1, mit einem thermischen Isoliermaterial zwischen Transportrohr (30) und Außenrohr (40).

13. Rohrleitung nach Anspruch 1, mit einem evakuierten ringförmigen Hohlraum zwischen Transportrohr (30) und Außenrohr (40)

## Claims

1. A pipeline having the following features:
a) a transport pipe (30) for a medium,
b) an outer pipe (40), which runs concentrically to the transport pipe (30) at a distance thereto around the transport pipe (30),
c) the transport pipe (30) is at least as long as the outer pipe (40),
d) two pipe sealing elements seated directly before each end of the outer pipe (40) on the transport pipe (30),
e) each pipe sealing element has a first ring-shaped body (10) and a second ring-shaped body (20), which are fixed against one another so that radial forces act from the second body (20) on the first body (10), and this first body (10) is thus deformed radially outward and inward and seals a ring space between outer pipe (40) and transport pipe (30),
**characterized in that**
f) in at least one pipe sealing element, the first body (10) comprises two sections (10a, 10b) situated one behind the other in the axial direction of the pipeline, one section (10b) having a larger external diameter than the other section (10a), and the larger external diameter of the section (10b) in the installed position of the pipe sealing element corresponding to the external diameter of the outer pipe (40), while the other section (10a) presses against the inner wall of the outer pipe (40).

2. The pipeline according to Claim 1, having a pipe sealing element in which at least one of the bodies (10, 20) has the form of a ring disc.

3. The pipeline according to Claim 1, having a pipe sealing element in which the second body (20) has a smaller external diameter than the first body (10).

4. The pipeline according to Claim 1, whose pipe sealing element has a first body (10) having multiple interruptions (12, 14) running in the axial direction (L) to receive clamping elements (25).

5. The pipeline according to Claim 4, having a pipe sealing element having screws as clamping elements (25) to fix the second body (20) on the first body (10).

6. The pipeline according to Claim 4, having a pipe sealing element, whose interruptions (12, 14) are formed, on their side (10r) facing toward the second body (20), having a cross-sectional expansion (14) running in the direction toward the second body (20).

7. The pipeline according to Claim 6, having a pipe sealing element whose cross-sectional expansion corresponds in section to a circular segment.

8. The pipeline according to Claim 6, having a pipe sealing element whose cross-sectional expansion is conical in section.

9. The pipeline according to Claim 1, having a pipe sealing element in which a peripheral notch (16) runs between both sections (10a, 10b).

10. The pipeline according to Claim 1, having a pipe sealing element whose first body (10) has a modulus of elasticity < 10 kN/mm².

11. The pipeline according to Claim 1, having a pipe sealing element whose second body (20) has a modulus of elasticity which is at least twice as large as that of the first body (10).

12. The pipeline according to Claim 1, having a thermal insulation material between transport pipe (30) and outer pipe (40).

13. The pipeline according to Claim 1, having an evacuated ring-shaped cavity between transport pipe (30) and outer pipe (40).

## Revendications

1. Tuyauterie avec les caractéristiques suivante :
a) un tube de transport (30) pour un fluide,
b) un tube extérieur (40) qui s'étend avec un écart par rapport au tube de transport (30), de manière concentrique vers ce dernier, autour du tube de transport (30),
c) le tube de transport (30) est au moins aussi long que le tube extérieur (40),
d) deux éléments d'étanchement de tube, reposant directement à l'avant de chaque extrémité du tube extérieur (40) sur le tube de transport (30),
e) chaque élément d'étanchement de tube comporte un premier corps annulaire (10) et un deuxième corps annulaire (20), qui sont fixés l'un par rapport à l'autre de sorte qu'à partir du deuxième corps (20), des forces radiales agissent sur le premier corps (10) et que de ce fait, ce premier corps (10) se déforme en direction radiale vers l'extérieur et l'intérieur et étanchéifie un espace annulaire entre le tube extérieur (40) et le tube de transport (30),
**caractérisé en ce que**
f) sur au moins un élément d'étanchement de tube, le premier corps (10) consiste dans deux sections (10a, 10b) placées l'une derrière l'autre dans la direction axiale de la tuyauterie, une section (10b) présentant un diamètre extérieur supérieur à celui de l'autre section (10a) et dans la position montée de l'élément d'étanchement de tube, le diamètre extérieur le plus grand de la section (10b) correspondant au diamètre extérieur du tube extérieur (40), alors que l'autre section (10a) s'appuie contre la paroi intérieure du tube extérieur (40).

2. Tuyauterie selon la revendication 1, avec un élément d'étanchement de tube, sur lequel au moins l'un des corps (10, 20) présente la forme d'une rondelle annulaire.

3. Tuyauterie selon la revendication 1, avec un élément d'étanchement de tube sur lequel le deuxième corps (20) présente un diamètre extérieur inférieur à celui du premier corps (10).

4. Tuyauterie selon la revendication 1, dont l'élément d'étanchement de tube comporte un premier corps (10) avec plusieurs ajours (12, 14) s'étendant en direction axiale (L) pour le logement d'éléments de serrage (25).

5. Tuyauterie selon la revendication 4, avec un élément d'étanchement de tube avec des vis en tant qu'éléments de serrage (25) pour la fixation du deuxième corps (20) sur le premier corps (10).

6. Tuyauterie selon la revendication 4, avec un élément d'étanchement de tube dont les ajours (12, 14) sont conçus sur leur côté (10r) faisant face au deuxième corps (20) avec un élargissement de section transversale (14) s'étendant en direction du deuxième corps (20).

7. Tuyauterie selon la revendication 6, avec un élément d'étanchement de tube dont l'élargissement de section transversale correspond en coupe à un segment de cercle.

8. Tuyauterie selon la revendication 6, avec un élément d'étanchement de tube dont l'élargissement de section transversale est conique en coupe.

9. Tuyauterie selon la revendication 1, avec un élément d'étanchement de tube, sur lequel entre deux sections (10a, 10b) s'étend une encoche (16) périphérique.

10. Tuyauterie selon la revendication 1, avec un élément d'étanchement de tube, dont le premier corps (10) présent un module d'élasticité < 10 kN/mm².

11. Tuyauterie selon la revendication 1, avec un élément d'étanchement de tube dont le deuxième corps (20) présente un module d'élasticité qui correspond au moins au double de celui du premier corps (10).

12. Tuyauterie selon la revendication 1, avec une matière d'isolation thermique entre le tube de transport (30) et le tube extérieur (40).

13. Tuyauterie selon la revendication 1, avec un espace creux annulaire évacué entre le tube de transport (30) et le tube extérieur (40).
